# EUROPEAN PATENT APPLICATION

(11) **EP 0 683 343 A2**
(43) Date of publication of application: **22.11.1995**
(21) Application number: 95303311.5
(22) Date of filing: 17.05.1995
(51) Int. Cl.: F16L 3/13, F16L 3/233

(54) **Fastener for elongated articles**

(30) Priority: 18.05.1994 JP 103685/94
(71) Applicant: EMHART INC., Newark, Delaware 19711 (US)
(72) Inventor: Kanie, Hideki, Toyohashi-shi, Aichi-ken (JP); Maruyama, Toshio, Toyohashi-shi, Aichi-ken (JP)
(74) Representative: Moffat, John Andrew

(57) **Abstract**

In known elongated member fasteners it is necessary to prepare a plurality of wings and receiving portions suitable to the respective elongated members of different diameters. In particular, the wings are arranged side by side. Thus, the length of the fastener cannot be reduced. In the known fasteners, the number of the wings varies with the diameters of the elongated member to be held. High insertion force is also required for some of elongated members of different diameters. Since the number of the wings is increased, a moulding die assembly becomes expensive. To solve this problem, the resilient wing (10a,10b) is made of such a size that the end of the wing can resiliently engage with the elongated member (11b) of the smallest diameter, which is held in the groove (7) on a base portion (6a,6b), under a natural or close to natural condition so that the wing (10a,10b) does not bend. The side wall of the groove (7) having the resilient wing (10a,10b) has such resiliency that the side wall can be bent outwardly with respect to the grooves (7).

## Description

The present invention relates to a fastener for holding elongated members of a circular sectional profile, such as an automobile fuel pipe, brake pipe, hose or wire-harness. More specifically, the present invention relates to an elongated member fastener for conveniently and easily holding various elongated members having different diameters.

A fastener for holding the above type of elongated members in an automobile is disclosed in, for example Japanese Utility Model Publication No. 5-22706. The known fastener disclosed in the above publication comprises a base portion having a stud mounting portion to be attached to a threaded stud which is fixed onto a panel, and gripper portions extending laterally from the base portion for holding the elongated members. The gripper portion has one or more U-shaped grooves in which the elongated members such as pipes are received. In order to hold the elongated member in the groove, one or both the side walls of the groove are provided with resilient wings, each of which diagonally extends from a side wall end toward the inner portion of the groove. The resilient wing has an end which can resiliently engage with the elongated member which is received in the groove. In this known fastener, the bottom of the groove is formed with a receiving portion for the elongated member.

The fastener disclosed in the above publication has a structure to conveniently and easily hold various elongated members having different diameters. To this end, one of the side walls in a single U-shaped groove is provided with a plurality of resilient wings of different sizes arranged side by side along the length of the groove. Two types of receiving portions on the bottom of the groove are made for small diameter and large diameter elongated members.

In the above conventional elongated member fastener it is necessary to prepare a plurality of wings and receiving portions suitable to the respective elongated members of different diameters. In particular, the wings are arranged side by side along the length of the groove. Thus, the length of the fastener cannot be reduced. In the conventional fastener, the number of the wings varies with the diameters of the elongated member to be held. High insertion force is also required for some of elongated members of different diameters. Since the number of the wings is increased, a moulding die assembly becomes expensive.

Thus, the present invention aims to solve the above problem in the conventional elongated member fastener which is applicable to elongated members of different diameters.

In accordance with the present invention to solve the above problem, the resilient wing is made of such a size that the end of the wing can resiliently engage with the elongated member of the smallest diameter, which is held in the groove on a base portion, under a natural or close to natural condition so that the wing does not bend. The side wall of the groove having the resilient wing has such resiliency that the side wall can be bent outwardly with respect to the grooves. The side wall is partially projected into the groove at a mid-height of the side wall to form a stop having such a size that the stop engages with the diametrically largest one of elongated members to cause the side wall to be bent.

In one preferred embodiment of the present inventions both side walls have the resilient wings which are formed symmetrically to each other. In another preferred embodiment of the present invention, the side wall having the resilient wing includes a lower portion substantially vertically extending from the base portion up to a position of the stop and an upper resilient portion further extending from the stop position in a height direction of the side wall and inclining toward the grooves and the wing is formed so as to extend from the end of the resilient portion. In that case, the inclination of the upper resilient portion may be defined so that when the large diameter elongated member is held, the resilient portion is bent to a position that is continued from the lower portion along the substantially same direction as the lower portion.

In still another preferred embodiment of the present invention, the bottom of the groove is provided with a receiving portion of a semi-circular sectional concave surface having a diameter corresponding to that of the large diameter elongated member. The wall having the wing preferably has a resilient property such that the wall end far from the base portion is inclined into the groove. The stop preferably has such a size that when the large diameter elongated member is inserted into the groove, the stop engages with the elongated member to hold the side wall in a direction substantially normal to the base portion.

In the present Invention, when the elongated member of smaller diameter is held, the elongated member does not engage with the stop formed on the side wall of the groove, but the end of the resilient wing resiliently engages with the surface of the elongated member facing to the open side of the groove to hold the elongated member. When an elongated member of larger diameter is held, the side of the elongated member engages with the stop on the side wall, and the resilient wing resiliently also engages with the surface of the elongated member facing to the open side of the groove. At this time, the upper portion of the side wall from the stop is bent laterally and outwardly with respect to the groove. Owing to this bending, the resilient wing takes an upper position higher than is the case for the small diameter elongated member, so that the larger diameter elongated member is smoothly held. In that case, the side wall may be formed so that even if the larger diameter elongated member is held the upper portion of the side wall is prevented from bending to an outwardly curved condition, resulting in producing an increased resistance against a force for removing the elongated member from the groove to establish a stable holding function. In the construction in which the bottom of the groove is provided with a pair of receiving portions of resilient walls being bendable outwardly in the lateral direction, the resilient walls are suitably bent in accordance with the diameter of the elongated member so that the resilient walls are associated with the resilient wing to establish a stable holding function.

According to the above structures of the present invention, a single type or kind of resilient wings allows various elongated members of different diameters to be smoothly held.

The invention will now be described, by way of example only, with reference to the accompanying figures, in which:
Figure 1 is a front view of a resilient fastener of one embodiment according to the present invention;
Figure 2 is a plan view of the fastener as shown in Figure 1;
Figure 3 is a sectional view taken along line 3-3 in Figure 2;
Figure 4 is a partially enlarged front view of the fastener showing a detail of a first type holding portion according to the present invention; and
Figure 5 is a partially enlarged front view similar to Figure 4 showing a detail of a second type holding portion.

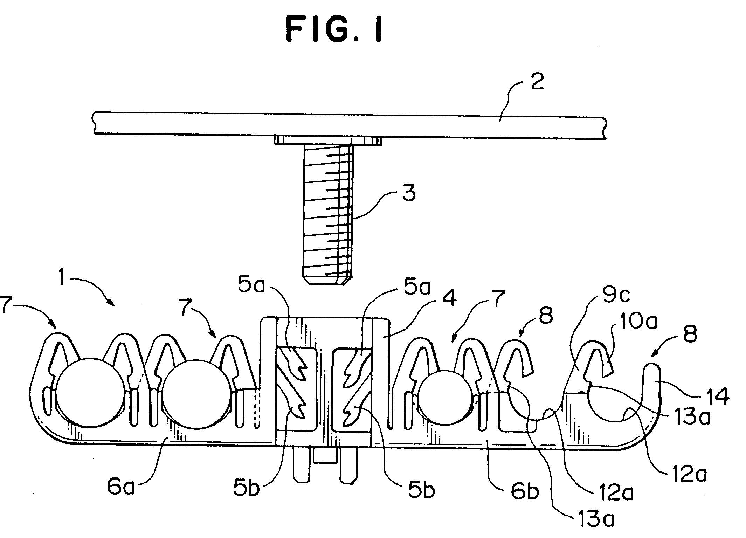

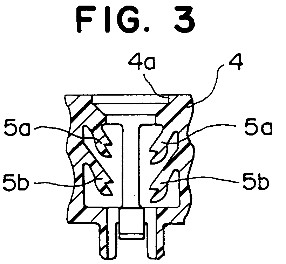

In Figure 1, a fastener 1 according to the present invention is moulded with plastic material, and comprises a mounting portion 4 which is attached to another fastener, such as a threaded or grooved stud 3 which is fixed onto a panel. The mounting portion 4 is formed in a rectangular block configuration and has a rectangular sectioned opening 4a for inserting the stud 3 which passes from the side facing with the panel 2 to the opposite side through the opening. Referring to Figure 3, the inner side of the opening 4a is formed with two pairs of engagement pawls 5a and 5b, each of the pairs having the engagement pawls engaging the opposite threaded sides of the stud 3.

At lateral opposite sides of the mounting portion 4, base portions 6a and 6b are formed in a belt shape. On one side of each of the base portions 6a, 6b holding portions are formed to hold the elongated members of a circular sectional profile, such as fuel pipes, brake pipes or wire-harnesses. As shown in Figure 1, one base portion 6a has two first type holding portions 7 which are placed and staggered in a longitudinal direction of the base portion 6a. The other base portion 6b has one first type holding portion 7 adjacent to the mounting portion 4 and two second type holding portions 8 away from the first holding portion 7, respectively.

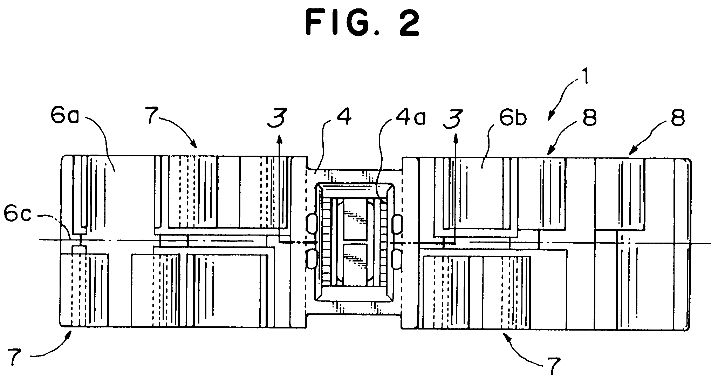

As shown in Figure 2, two holding portions 7 formed on the base portion 6a are positioned so that one of the portions is placed on one side with respect to a longitudinal centre line 6c and the other portion is placed on the opposite side from the centre line. As shown in Figure 1, both holding portions 7 are slightly overlapped at their adjacent ends widthwise of the base portion 6a. The first type holding portion 7 on the base portion 6b is placed on one side with respect to a longitudinal centre line 6e and the two second type holding portions 8 are placed on the opposite side from the centre line, respectively. Both the first type holding portion 7 and the second type holding portions 8 on the base portion 6b are slightly overlapped at their adjacent ends widthwise of the base portion 6a.

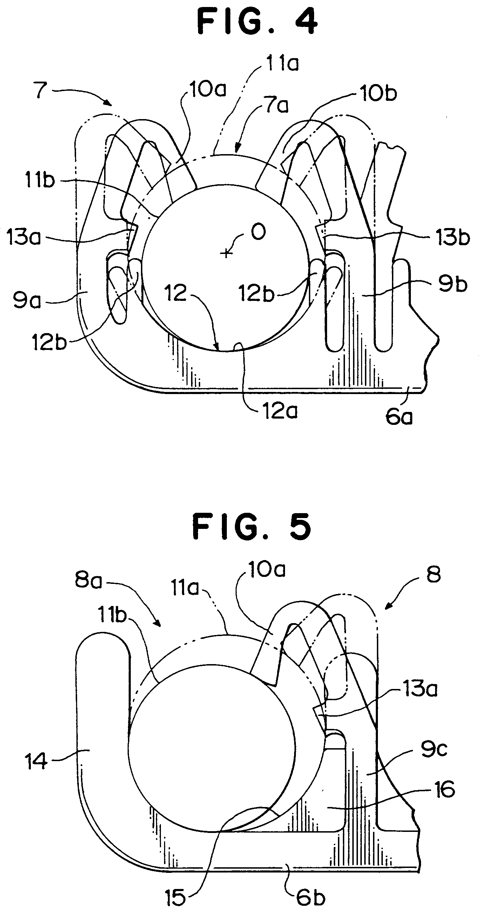

Figure 4 shows the first type holding portion 7 on the base portion 6a in detail. The first type holding portion 7 on the base portion 6b also has the same or similar construction. The holding portion 7 has a generally U-shaped groove 7a formed on one side of the base portion 6a. The groove 7a is defined by a pair of side walls 9a, 9b which are spaced to each other and stand from one side of the base portion 6a. An end of each of the side walls 9a, 9b is provided with a resilient wing 10a or 10b which diagonally extend toward the groove 7a.

In the preferred embodiment, the side walls 9a, 9b extend vertically from the base portion 6a up to a position substantially equal to a height of the centre 0 of a section of a large diameter elongated member 11a which is held in holding portion 7, and further extends from the above position upwardly to form an upper inclined portion toward the groove 7a.

The bottom of the groove 7a is provided with a receiving portion 12 to receive the elongated member. The receiving portion 12 has a bottom 12a formed with an arcuate surface and a pair of resilient walls 12b formed on the opposite ends of arcuate bottom 12a. The inner sides of the side walls 9a and 9b are provided with stops 13a and 13b laterally inwardly projecting from the wall. The stop 13a, 13b is formed at a position adjacent to the lower end of the inclined portion of the side wall 9a, 9b.

Figure 4 shows with solid lines that a small diameter elongated member 11b is inserted in the groove to hold the member therein. The resilient walls 12b of the receiving portion 12 receive the lower half of the elongated member 11b without any bending. The stops 13a and 13b on the side walls 9a and 9b of the groove 7a are not into contact with the elongated member 11b. The end of the resilient wing 10a, 10b resiliently engages with the upper side of the elongated member under a natural or close to natural condition of non-bending of the wings so as to resiliently support the elongated member. In this embodiment the resilient walls 12b of the receiving portion 12 serve to be associated with the resilient wings 10a and 10b to stably hold the elongated member 11b. However, the resilient walls 12b are not always required. When the small diameter elongated member 11b passes between the resilient wings 10a and 10b to be inserted in the groove 7a, the resilient wings 10a and 10b are bent outwardly to enable the insertion of the member. When the elongated member 11b has been completely inserted in the groove 7a, the resilient wings 10a and 10b and the side walls 9a and 9b are resiliently returned to a non-bending condition or its close condition that is shown by the solid line in Figure 4.

Figure 4 also shows with dot chain lines or phantom lines that the large diameter elongated member 11a is inserted in the groove 7a to hold the member therein. The stops 13a and 13b on the inner surfaces of the side walls 9a and 9b abut against the elongated member 11a to provide the side walls 9a and 9b with outward force. As a result, as shown by the dot chain lines, the upper portions of the side walls 9a and 9b are bent outwardly up to a position that the upper portions are substantially normal to the base portion 6a. Under this condition, the ends of the resilient wings 10a and 10b engage with the upper side of the elongated member 11a to resiliently hold the elongated member 11a. The resilient walls 12b of the receiving portion 12 are outwardly bent in accordance with the diameter of the large diameter elongated member 11a. In that case, the resilient walls 12b of the receiving portion 12 serve to be associated with the resilient wings 10a and 10b to stably hold the elongated member 11a. However, the resilient walls 12b are not always required. When the large diameter elongated member 11a passes between the resilient wings 10a and 10b to be inserted in the groove 7a, the resilient wings 10a and 10b are bent outwardly to enable the insertion of the member. When the elongated member 11a has been completely inserted in the groove 7a, the resilient wings 10a and 10b and the side walls 9a and 9b are apt to be returned to a non-bending condition. However the side walls 9a and 9b cannot be returned to the original position because the stops 13a and 13b are brought into engagement with the large diameter elongated member 11a. The upper portion of the side wall is also retained as it stands substantially perpendicular to the base portion 6a. The resilient wings 10a and 10b are resiliently returned so that the end of the wing, as shown by the dot chain lines, engages with the upper side or the elongated member 11a to resiliently hold the elongated member 11a.

Figure 5 shows the second type holding portion 8 in detail. In this embodiment, the second type holding portion 8 is formed on the base portion 6b. In the second type holding portion 8, the same elements as the first type holding portion 7 have like reference numerals. The explanation for the same elements are omitted. The second type holding portion 8 has a generally U-shaped groove 8a formed on one side of the base portion 6b. The second type holding portion 8 is formed with a side wall 9c on only one side of the groove 8a. The side wall 9c has a resilient wing 10a in the same way as the side walls 9a and 9b have the wings 10a and 10b of the first type holding portion 7. The other side of the groove 8a is provided with a hard side wall 14. The bottom of the groove 8a is formed with a receiving portion 15 of a semicircular sectional concave surface having a diameter corresponding to that of the large diameter elongated member 11a. In this embodiment, a thick corner portion 16 is formed on the lower half of the side wall 9c adjacent to the groove, so that the lower half of the side wall 9c is made hard.

As shown in Figure 1, the base portion 6b has two second type holding portions 8. The holding portion 8 close to the mounting portion 4 has the side wall 9c of the adjacent holding portion 8 which functions as the hard side wall in place of the hard side wall 14. The holding operations of the second type holding portion 8 for the small diameter and large diameter elongated members 11b and 11a are of the same fashion as the holding operations of the first type holding portion 7.

As discussed above, the elongated member fastener of the present invention can hold various elongated members of circular section having different diameters by means of common type wings so that it is not necessary to provide plural kind resilient wings in one groove.

## Claims

**1** A fastener for elongated members comprising:
a mounting portion adapted to be attached to another fastener
which is fixed onto a panel;
a base portion extending laterally from the mounting portion;
holding portions having generally U-shaped grooves formed on one side of the base portion for holding the elongated members of a circular sectional profile in the grooves;
resilient wings formed on the holding portions for resiliently holding the elongated members, each of the wings diagonally extending from an end of at least one side wall of the groove toward the inner portion of the groove and having an end being engageable with the elongated member received in the groove;
characterised in that the resilient wing is made of such a size that the end of the wing can resiliently engage with the elongated member of the smallest diameter among various elongated members under a natural or close to natural condition such that the wing does not bend;
that the one side wall in the groove has such resiliency that the side wall can be bent outwardly with respect to the grooves; and
the one side wall in the groove is partially projected into the groove at a mid-height of the side wall to form a stop having such a size that the stop engages with the diametrically largest one of elongated members to cause the side wall to be bent.

**2** A fastener for elongated members according to claim 1 characterised in that both side walls have the resilient wings which are formed symmetrically to each other.

**3** A fastener for elongated members according to claim 1 or claim 2 characterised in that the side wall having the resilient wing includes a lower portion substantially vertically extending from the base portion up to a position of the stop and an upper resilient portion further extending from the stop position in a height direction of the side wall and inclining toward the groove, the wing is formed so as to extend from the end or the upper resilient portion, and the inclination of the upper resilient portion is defined so that when the large diameter elongated member is held, the resilient portion is bent to a position that is continued from the lower portion along the substantially same direction as the lower portion.

**4** A fastener for elongated members according to any of claims 1 to 3 characterised in that the bottom of the groove is provided with a pair of receiving portions of resilient walls which can be bent outwardly in the lateral direction.

**5** A fastener for elongated members according to any of claims 1 to 3 characterised in that the bottom of the groove is provided with a receiving portion of a semicircular sectional concave surface having a diameter corresponding to that of the large diameter elongated member.

**6** A fastener for elongated members according to any of claims 1 to 5 characterised in that the wall having the wing has a resilient property that the wall end far from the base portion is inclined into the groove, and the stop has such a size that when the large diameter elongated member is inserted into the groove, the stop engages with the elongated member to hold the side wall in a direction substantially normal to the base portion.
